# EUROPEAN PATENT SPECIFICATION

(11) **EP 2 497 397 B1**
(45) Date of publication and mention of the grant of the patent: **02.04.2014**
(21) Application number: 12156331.6
(22) Date of filing: 21.02.2012
(51) Int. Cl.: A47J 31/44, A47J 31/60

(54) **A milk container associable to a dispenser of a flow of steam and/or water of a coffee machine**
Milchbehälter zum Anschluss an einen Dampf- oder Wasserspender einer Kaffeemaschine
Récipient de lait pouvant être associé à un distributeur de flux de vapeur et/ou d'eau d'une machine à café

(30) Priority: 11.03.2011 IT MI20110392
(43) Date of publication of application: 12.09.2012
(73) Proprietor: De'Longhi Appliances S.r.l., 31100 Treviso (IT)
(72) Inventor: De' Longhi, Giuseppe, 31100 Treviso (IT)
(74) Representative: Rapisardi, Mariacristina

(56) References cited:
- DE-U1-202009 014 114
- US-A- 5 738 002

## Description

The present invention relates to a milk container associable to a steam and/or water dispenser of a coffee machine.

Document D202009014114 U1 discloses the preamble of claim 1.

A version of coffee machine at present available on the market exhibits a milk container associable to the steam and/or water dispenser of the coffee machine for dispensing foamed milk into a cup, to which infused coffee is added, in order to prepare a cappuccino.

In general this container exhibits a lid supporting a manifold body exhibiting in turn a connecting conduit to a steam and/or water dispenser of the coffee machine, a suction conduit, by Venturi effect, of a flow of milk present in the container, an air suction conduit, again by Venturi effect, and a connecting conduit to a dispensing nozzle.

The container can comprise a manual or automatic regulating system of the air flow, exclusively intended for regulating the foaming of the milk drink according to the consumer's preferences.

Since in use the internal parts of the container, and in particular the manifold body and the channelling of the air flow tend to become contaminated with milk residues, a washing system is required, which prevents formation of encrustations which would lead to a deterioration in the machine's performance, as well as a worsening of the hygienic conditions thereof.

Many of the washing systems in the prior art are excessively structurally and functionally complex, and are especially not easy to use for the consumer, of whom a long operation is required in order to complete the washing; for example a button has to be held in for all the time required for the washing operation itself. Furthermore, these washing systems do not offer the possibility of easy access and/or inspection of the washed parts in order to verify the state of cleanliness of the parts subject to fouling.

Sometimes the washing systems are unwieldy or require availability of considerable space for the movement of the functional parts thereof.

A technical task of the present invention is therefore to realise a milk container associable to the steam and/or water dispenser of a coffee machine, which enable eliminating the technical drawbacks of the prior art.

In the ambit of this technical task, an aim of the invention is to realise a milk container associable to the steam and/or water dispenser of a coffee machine, which enables washing the internal parts thereof with a structurally and functionally simple system, which is also effective and not unwieldy.

A further aim of the invention is to realise a milk container associable to the steam and/or water dispenser of a coffee machine, which exhibits a facilitated inspection ability and access to the parts most liable to be fouled, for a rapid evaluation of their condition.

The technical task, as well as this and other aims, according to the present invention, are attained by a milk container associable to the dispenser of a steam and/or air flow of a coffee machine, comprising a manifold body to which accede a connecting conduit to said steam and/or water dispenser, a suction conduit operating by Venturi effect to suck milk present in said container, a suction conduit of air by Venturi effect, and a dispensing conduit, being further provided a manually-commanded rotating organ for activation of regulating means of the air suction, an operating position of said rotating organ being associated to performing of a washing cycle of at least said manifold body with said flow of steam and/or water, **characterised in that** it comprises transforming means of the rotation of said activating organ for reaching said operating position into a translation of an activating element in order to reach at least a first microswitch for activation of said washing cycle.

The invention enables obtaining an effective washing with an extremely simple, compact and reliable device.

Further characteristics and advantages of the invention will more fully emerge from the description of a preferred but not exclusive embodiment of the milk container for coffee machines according to the invention, illustrated by way of non-limiting example in the accompanying drawings, in which:

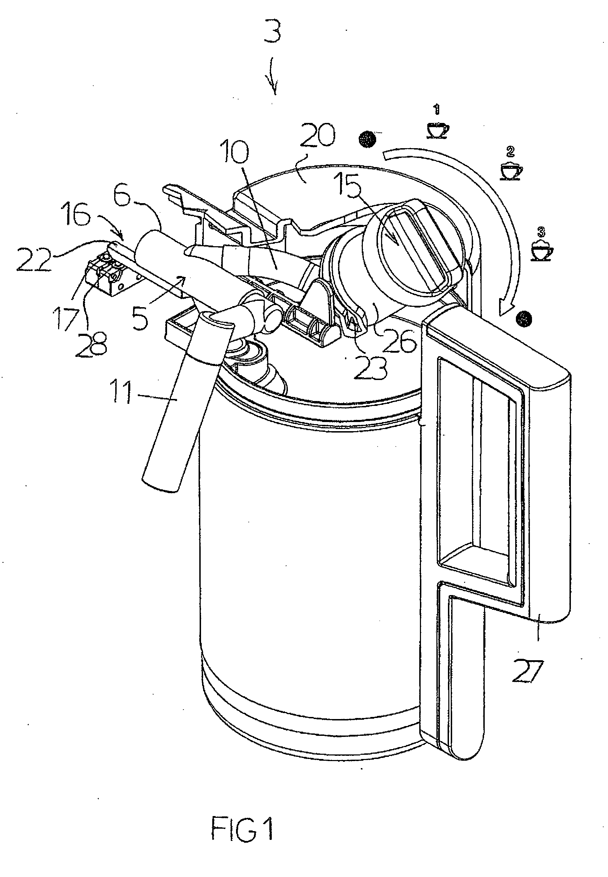

- figure 1 illustrates a perspective view of the milk container;

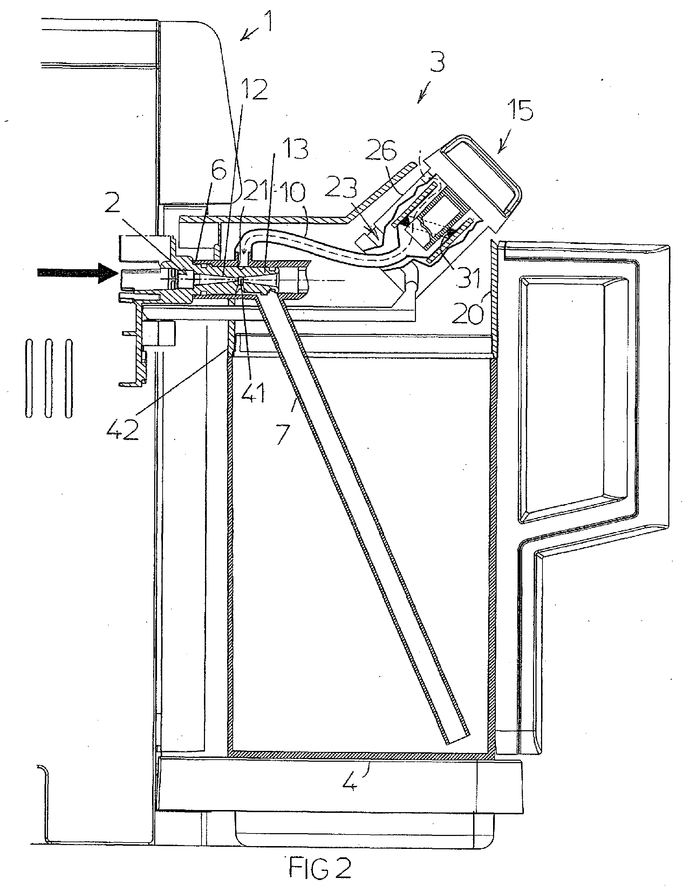

- figure 2 is a lateral raised view of the vertically sectioned milk container associated to the coffee machine;

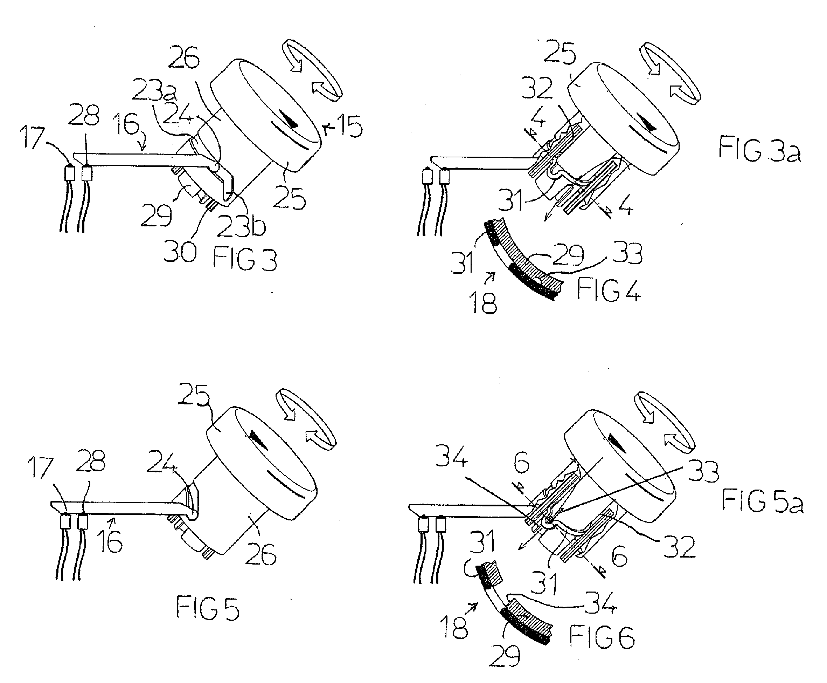

- figure 3 is a perspective view of the manually-commanded rotating organ in an intermediate position for regulation of the foam;
- figure 3a illustrates the rotating organ of figure 3 with the cylindrical bushing sectioned;
- figure 4 is a detail of the regulating means of the suction of air, sectioned along line 4-4 of figure 3a;
- figure 5 is a perspective view of the manually-commanded rotating organ in the washing position;
- figure 5a is the rotating organ of figure 5 with the cylindrical bushing sectioned;
- figure 6 is a detail of the regulating means of the air suction, sectioned along line 6-6 of figure 5a.

With reference to the figures cited, a coffee machine 1 is illustrated, exhibiting a steam and/or water dispenser 2 to which a milk container 3 is removably associable.

The dispenser 2 horizontally projects from the front part of the coffee machine 1 which in turn exhibits the milk container 3 supported on the cup rest 4, but it is clear that the position and orientation of the dispenser 2 and the position of the milk container 3 can be different from what is illustrated, for example the milk container 3 can also be positioned laterally to the cup rest 4 and the dispenser 2 can also project from a lateral wall of the coffee machine 1 and can also have a vertical orientation.

The milk container 3 comprises a manifold body 5 to which the following accede: a connecting conduit 6 to the dispenser 2, a suction conduit 7 by Venturi effect of the milk present in the container 3, an air suction conduit 10 by Venturi effect, and a dispensing conduit 11.

In the specific embodiment, the Venturi effect is determined by the conformation of the internal surface of the dispenser 2 which includes a gully 41 that separates a converging tract 12 from a diverging tract 13 and enables separate access to the air flow and the milk flow at the gully 41.

Naturally the Venturi effect can alternatively be determined completely, or at least in part, by a special conformation of the internal surface of the manifold body 5. The container 3 further exhibits a manually-commanded rotating organ 15 for activation of regulating means 18 of the air suction.

The activating organ 15 has an operating position that is associated to the performing of a washing cycle at least of the manifold body 5 and in particular also the dispensing conduit 11 and the dispenser 2.

The container 3 comprises transforming means of the rotation of the activating organ 15 for reaching said operating position in a translation of an activating element 16 for reaching at least a first microswitch 17 present on the coffee machine 1, for activating the washing cycle.

The coffee machine 1 further exhibits a second microswitch 28, activatable by the activating element 16 before the first microswitch 17 in order to signal, to the control logic of the coffee machine 1, that the connection between the dispenser 2 and the connecting conduit 6 has been made.

At this operating position of the activating organ 15, the regulating means 18 advantageously exhibit an enabled configuration of the suction of an air flow at least sufficient to undo the suction of the milk.

The manifold body 5, the activating organ 15, the regulating means 18, the transforming means and the activating element 16 are advantageously supported by a lid 20 of the container 3, as the container 3 in turn is further provided with a handle 27.

The regulating means 18 are located along the air suction conduit 10 in a remote position from the outlet 21 of the air suction conduit 10 in the manifold body 5. This prevents contamination of the regulating means with any residues of milk rising through the air suction conduit 10.

The activating organ 15 exhibits a rotation axis that is transversal to the translation direction of the activating element 16.

The activating element 16 comprises a rod 22 that is translatable parallel to the longitudinal axis thereof.

The axis of the rod 22 is preferably orientated in a horizontal plane while the rotation axis of the activating organ 15 is preferably orientated in a vertical plane, and in particular it is inclined in an upwards direction.

The rod 22 in particular projects from the lateral delimitation wall 42 of the lid 20 of the container 3 at the region where the connecting conduit 6 to the dispenser 2 is provided.

The transforming means comprise an activating cam 23 of a drawing element 24 of the activating element 16.

The cam 23 is solid in rotation with the activating organ 15 while the drawing element 24 is solid in translation with the activating element 16.

The activating organ 15 comprises a grip 25 solidly constrained to a cylindrical bushing 26 that is coaxial to the rotation axis of the activating organ 15 and externally exhibits the cam 23.

A preferably-hollow cylindrical stem 29, solidly constrained to the bushing 26, is positioned coaxially internally of the bushing 26.

The stem 29 is coaxially pressure-fitted in an internally cylindrical sleeve 30 realised on the lid 20 and delimiting, with the stem 29, a space 32 which represents part of the air suction conduit 10.

The regulating means 18 comprise a seal 31 positioned in the space 32.

The seal 31 is fixed to the internal perimeter of the sleeve 30 and circumscribes the stem 29, with which it is destined to cooperate for regulating the passage section for the air flow sucked through the suction conduit 10.

The seal 31 develops along a closed line with a variable height with respect to the axis of the sleeve 30.

The stem 29 engages perimetrally, with the lateral wall thereof against the seal 31. The lateral wall of the stem 29 exhibits a calibrated groove 33 which exhibits a depth of penetration into the thickness of the lateral wall of the stem 29 that grows progressively in the axial direction of the stem 29.

The groove 33, at its greatest point of depth of penetration into the thickness of the lateral wall of the stem 29, connects to a hole 34 from which the air can freely flow along the suction conduit 10.

The rotation of the stem 29 on the axis thereof causes an axially-directed displacement of the intersection zone between the seal 31 and the groove 33 which, due to the variability of the depth of penetration of the groove 33, determines in turn a change of the air flow passage section in the suction conduit 10.

The air suction regulating means 18 determine a substantially reverse correlation between the flow of air and the flow of milk sucked into the flow of steam and/or water.

The activating organ 15 exhibits at least a first command position of the production of hot and/or foamed milk in which the regulating means 18 establish a positive value of both the air flow and the milk flow sucked into the flow of steam and/or water, in addition to the command position for the performing of a washing cycle, in which the regulating means 18 establish a maximum value of the flow of air to which a nil value of the milk flow corresponds.

In the illustrated case the activating organ 15 exhibits a command position of the non-foamed milk production, in which the regulating means 18 establish a nil value of the air flow (the seal 31 is above the groove 33) to which a maximum value of the milk flow corresponds, a command position of the normally-foamed milk production, in which the regulating means 18 establish a positive value of the air flow to which a positive value of the milk flow corresponds, a command position of the very-foamed milk production, in which the regulating means 18 establish a positive value of the air flow that is greater than the value determined in the preceding position to which a positive value of the milk flow lower than the flow determined in the preceding position corresponds (the intersection zone between the seal 31 and the groove 33 moves in an axial direction downwards, freeing a greater passage section of the air in the suction conduit 10), a command position of the performing of the washing cycle (in which the seal 31, completely offset from the groove 33, is superposed on the hole 34, freeing the maximum air passage section in the suction conduit 10), and a position for mounting and demounting thereof to and from the sleeve 30.

The functioning of the coffee machine is briefly as follows.

When the consumer wants a cappuccino, she or he associates the milk container 3, possibly kept in the refrigerator, to the dispenser 2 of the coffee machine.

With this simple operation the activating element 16 activates the microswitch 28. The user rotates the grip 25 to select the desired degree of foaming, and presses the start-dispensing button positioned on the front panel of the coffee machine.

The rotation of the grip 25 for the selection of the various desired degrees of foaming is associated to the sliding of the drawing element 24 along a substantially neutral tract 23a of the cam 23. The activating element 16 consequently remains substantially still.

When the user feels the need to perform the washing operation of the internal parts of the lid 3, she or he rotates the grip 25 towards the associated washing position. The rotation of the grip 25 in this case is associated to the sliding of the drawing element 24 along an active tract 23b of the cam 23 and consequently the activating element 16 translates up to activating the microswitch 17 which enables the dispensing of a flow of steam and/or washing water.

During dispensing of the flow of steam and/or washing water, the air flow sucked into the steam flow and/or washing water is of such an amount as to be sufficient by itself to compensate for the depression which is created along the flow of steam and/or washing water and therefore no suction of milk takes place.

The flow of steam and/or washing water moves along and cleans the dispenser 2, the manifold body 5 and the dispensing conduit 11 from which it is expelled and conveyed for example into the basin normally present below the cup rest 4.

It has been found that the container of the invention can be particularly compact because the parts in movement exhibit, in all their operating positions, a very limited variation in size which leaves large spaces available for other functional parts.

In particular the activation of the washing cycle is made possible by an activating organ which, as it rotates on itself, maintains its size practically unvaried, and by an activating organ which requires only a limited translation along the longitudinal axis thereof which produces an insignificant increase in the size thereof.

The performing of the washing cycle is further particularly easy for the consumer, who merely has to rotate a grip without any need to perform a prolonged action on a command part of the machine.

The milk container for a coffee machine, as it is conceived herein, is susceptible to numerous modifications and variants, all falling within the ambit of the inventive concept; further, all the details can be replaced by technically-equivalent elements. In practice the materials used, as well as the dimensions, can be any, according to requirements and the state of the art.

## Claims

1. A milk container (3) associable to a dispenser (2) of a flow of steam and/or water of a coffee machine (1), comprising a manifold body (5) to which accede a connecting conduit (6) to said steam and/or water dispenser (2), a suction conduit (7) operating by Venturi effect to suck milk present in said container (3), a suction conduit (10) of air by Venturi effect, and a dispensing conduit (11), being further provided a manually-commanded rotating organ (15) for activation of regulating means (18) of the air suction, **characterized in that** it comprises an operating position of said rotating organ (15) being associated to performing of a washing cycle of at least said manifold body (5) with said flow of steam and/or water, and transforming means of the rotation of said rotating organ (15) for reaching said operating position into a translation of an activating element (16) in order to reach at least a first microswitch (17) for activation of said washing cycle.

2. A milk container (3) according to the preceding claim, **characterised in that** at said operating position of said rotating organ (15) said regulating means (18) exhibit an enabled configuration of the suction of an air flow which is at least sufficient to undo the suction of the milk.

3. A milk container (3) according to the preceding claim, **characterised in that** said manifold body, said rotating organ (15), said regulating means (18), said transforming means and said activating element (16) are supported by a lid (20) of said container (3).

4. A milk container (3) according to any one of the preceding claims, **characterised in that** said regulating means (18) are located along said air suction conduit (10) in a remote position from an outlet (21) of said air suction conduit (10) in said manifold body (5).

5. A milk container (3) according to the preceding claim, **characterised in that** said rotating organ (15) exhibits a rotation axis which is transversal to the translating direction of said activating element (16).

6. A milk container (3) according to the preceding claim, **characterised in that** said activating element (16) comprises a rod which is translatable parallel to a longitudinal axis thereof.

7. A milk container (3) according to the preceding claim, **characterised in that** said rod is horizontal.

8. A milk container (3) according to the preceding claim, **characterised in that** said rod projects from a lateral delimitation wall (23) of the container (3) in a region thereof which comprises the connecting conduit (6) to the dispenser (2).

9. A milk container (3) according to any one of the preceding claims, **characterised in that** said rotating organ (15) exhibits a rotation axis which is inclined in an upwards direction.

10. A milk container (3) according to any one of the preceding claims, **characterised in that** said transforming means comprise an activating cam (23) of a drawing element (24) of said activating element (16), said cam (23) being solid in rotation with said rotating organ (15) and said drawing element (24) being solid in translation with said activating element (16).

11. A milk container (3) according to the preceding claim, **characterised in that** said rotating organ (15) comprises a grip (25) which is solidly constrained to a cylindrical bushing (26) which is coaxial to the rotation axis of the rotating organ (15) and externally exhibits said cam (23).

12. A milk container (3) according to any one of the preceding claims, **characterised in that** a cylindrical stem (29) is positioned coaxially internally of the bushing (26) and is solidly constrained to the bushing (26), said stem (29) being coaxially pressure-fitted in an internally cylindrical sleeve (30) realised on the lid (20) and delimiting, with the stem (29), a space (32) in which a seal (31) is positioned, which seal (31) is fixed to an internal perimeter of the sleeve (30) and circumscribes the stem (29) with which it is destined to define said regulating means (18).

13. A milk container (3) according to the preceding claim, **characterised in that** the seal (31) develops along a closed line having a variable height with respect to the axis of the sleeve (30), and **in that** the lateral wall of the stem (29) exhibits a calibrated groove (33) superposable on the seal (31) and exhibiting a depth of penetration into the thickness of the lateral wall of the stem (29) which grows progressively in the axial direction of the stem (29).

14. A coffee machine (1) exhibiting a container (3) as in one or more of the preceding clams.

## Patentansprüche

1. Milchbehälter (3) zum Anschluss an einen Spender (2) von einem Dampf- oder Wasserstrom einer Kaffeemaschine (1), umfassend einen Verteilerkörper (5), zu dem eine Verbindungsleitung (6) zum Dampf-oder Wasserspender (2), eine Saugleitung (7), betrieben durch Venturi-Effekt, zur Ansaugung von im Behälter (3) enthaltener Milch, eine Luftsaugleitung (10) durch Venturi-Effekt und eine Ausgabeleitung (11) führen, wobei ferner ein manuell betätigtes Drehorgan (15) bereitgestellt ist, um Regulierungsmittel (18) der Luftansaugung zu aktivieren, **dadurch gekennzeichnet, dass** er eine Betriebsposition des Drehorgans (15) umfasst, verbunden, um einen Spülzyklus mindestens des Verteilerkörpers (5) mit dem Dampf- oder Wasserstrom durchzuführen, sowie Umwandlungsmittel der Drehung des Drehorgans (15), um diese Betriebsposition in eine Verschiebung eines Aktivierungselements (16) zu erreichen, um mindestens einen ersten Mikroschalter (17) zur Aktivierung des Spülzyklus zu erreichen.

2. Milchbehälter (3) nach dem vorhergehenden Anspruch, **dadurch gekennzeichnet, dass** die Regulierungsmittel (18) in der genannten Betriebsposition des Drehorgans (15) eine aktivierte Konfiguration der Ansaugung eines Luftstroms aufweisen, der zumindest ausreichend ist, um die Milchansaugung aufzuheben.

3. Milchbehälter (3) nach dem vorhergehenden Anspruch, **dadurch gekennzeichnet, dass** der Verteilerkörper, das Drehorgan (15), die Regulierungsmittel (18), die Umwandlungsmittel und das Aktivierungselement (16) von einem Deckel (20) des Behälters (3) getragen werden.

4. Milchbehälter (3) nach einem der vorhergehenden Ansprüche, **dadurch gekennzeichnet, dass** sich die Regulierungsmittel (18) entlang der Luftansaugungsleitung (10) an einer von einem Auslass (21) der Luftansaugungsleitung (10) im Verteilerkörper (5) entfernten Position befinden.

5. Milchbehälter (3) nach dem vorhergehenden Anspruch, **dadurch gekennzeichnet, dass** das Drehorgan (15) eine Rotationsachse aufweist, die quer zur Verschieberichtung des Aktivierungselements (16) verläuft.

6. Milchbehälter (3) nach dem vorhergehenden Anspruch, **dadurch gekennzeichnet, dass** das Aktivierungselement (16) einen Stab umfasst, der verschiebbar parallel zu einer Längsachse davon angeordnet ist.

7. Milchbehälter (3) nach dem vorhergehenden Anspruch, **dadurch gekennzeichnet, dass** der Stab waagerecht ist.

8. Milchbehälter (3) nach dem vorhergehenden Anspruch, **dadurch gekennzeichnet, dass** der Stab aus einer seitlichen Abgrenzungswand (23) des Behälters (3) in einem Bereich davon herausragt, der die Verbindungsleitung (6) zur Ausgabe (2) umfasst.

9. Milchbehälter (3) nach einem der vorhergehenden Ansprüche, **dadurch gekennzeichnet, dass** das Drehorgan (15) eine Rotationsachse aufweist, die in eine Aufwärtsrichtung geneigt ist.

10. Milchbehälter (3) nach einem der vorhergehenden Ansprüche, **dadurch gekennzeichnet, dass** die Umwandlungsmittel einen Aktivierungsnocken (23) eines Ziehelements (24) des Aktivierungselements (16) umfassen, wobei dieser Nocken (23) fest in Drehung mit dem Drehorgan (15) verbunden ist und das Ziehelement (24) fest in Verschiebung mit dem Aktivierungselement (16) verbunden ist.

11. Milchbehälter (3) nach dem vorhergehenden Anspruch, **dadurch gekennzeichnet, dass** das Drehorgan (15) einen Griff (25) aufweist, der fest mit einer Zylinderbuchse (26) verbunden ist, die koaxial zur Rotationsachse des Drehorgans (15) verläuft und an der Außenseite den Nocken (23) aufweist.

12. Milchbehälter (3) nach einem der vorhergehenden Ansprüche, **dadurch gekennzeichnet, dass** ein Zylinderschaft (29) koaxial in der Buchse (26) positioniert und fest mit der Buchse (26) verbunden ist, wobei der Schaft (29) koaxial in eine interne Zylinderhülse (30) eingepresst ist, die auf dem Deckel (20) ausgebildet ist und mit dem Schaft (29) einen Bereich (32) abgrenzt, in dem eine Dichtung (31) positioniert ist, wobei diese Dichtung (31) an einem internen Umfang der Hülse (30) fixiert ist und den Schaft (29) umgibt, mit dem sie dazu bestimmt ist, die Regulierungsmittel (18) zu definieren.

13. Milchbehälter (3) nach dem vorhergehenden Anspruch, **dadurch gekennzeichnet, dass** sich die Dichtung (31) entlang einer geschlossenen Linie entwickelt, die zur Achse der Hülse (30) eine variable Höhe aufweist, und dadurch, dass der Schaft (29) eine kalibrierte Rille (33) aufweist, die auf der Dichtung (31) gelagert werden kann und eine Durchdringungstiefe in die Dicke der Seitenwand des Schafts (29) aufweist, die progressiv in axialer Richtung des Schafts (29) zunimmt.

14. Kaffeemaschine (1), aufweisend einen Behälter (3) nach einem oder mehreren der vorhergehenden Ansprüche.

## Revendications

1. Récipient de lait (3) pouvant être associé à un distributeur (2) de flux de vapeur et/ou d'eau d'une machine à café (1), comprenant un corps de manifold (5) auquel accède un conduit de raccordement (6) au dit distributeur de vapeur et/ou d'eau (2), un conduit d'aspiration (7) fonctionnant par effet Venturi pour aspirer le lait présent dans ledit récipient (3), un conduit d'aspiration (10) d'air par effet Venturi, et un conduit de distribution (11), étant de plus pourvu d'un organe tournant (15) commandé manuellement pour l'activation de moyens de réglage (18) de l'aspiration d'air, **caractérisé en ce qu'**il comprend une position fonctionnelle dudit organe tournant (15) étant associée à la réalisation d'un cycle de lavage d'au moins ledit corps de manifold (5) avec ledit flux de vapeur et/ou d'eau, et des moyens de transformation de la rotation dudit organe tournant (15) pour atteindre ladite position fonctionnelle en une translation d'un élément d'activation (16) afin d'atteindre au moins un premier microrupteur (17) pour l'activation dudit cycle de lavage.

2. Récipient de lait (3) selon la revendication précédente, **caractérisé en ce que**, lors de ladite position fonctionnelle dudit organe tournant (15), lesdits moyens de réglage (18) présentent une configuration d'habilitation de l'aspiration d'un flux d'air étant au moins suffisant pour annuler l'aspiration du lait.

3. Récipient de lait (3) selon la revendication précédente, **caractérisé en ce que** ledit corps de manifold, ledit organe tournant (15), lesdits moyens de réglage (18), lesdits moyens de transformation et ledit élément d'activation (16) sont supportés par un couvercle (20) dudit récipient (3).

4. Récipient de lait (3) selon l'une quelconque des revendications précédentes, **caractérisé en ce que** lesdits moyens de réglage (18) sont situés le long dudit conduit d'aspiration d'air (10) situés à distance d'une sortie (21) dudit conduit d'aspiration d'air (10) dans ledit corps de manifold (5).

5. Récipient de lait (3) selon la revendication précédente, **caractérisé en ce que** ledit organe tournant (15) présente un axe de rotation étant transversal à la direction de translation dudit élément d'activation (16).

6. Récipient de lait (3) selon la revendication précédente, **caractérisé en ce que** ledit élément d'activation (16) comprend une tige pouvant se déplacer parallèlement à un axe longitudinal.

7. Récipient de lait (3) selon la revendication précédente, **caractérisé en ce que** ladite tige est horizontale.

8. Récipient de lait (3) selon la revendication précédente, **caractérisé en ce que** ladite tige dépasse d'une paroi de délimitation latérale (23) du récipient (3) dans une zone comprenant le conduit de raccordement (6) jusqu'au distributeur (2).

9. Récipient de lait (3) selon l'une quelconque des revendications précédentes, **caractérisé en ce que** ledit organe tournant (15) présente un axe de rotation étant incliné dans une direction orientée vers le haut.

10. Récipient de lait (3) selon l'une quelconque des revendications précédentes, **caractérisé en ce que** lesdits moyens de transformation comprennent une came d'activation (23) d'un élément de traction (24) dudit élément d'activation (16), ladite came (23) étant solidaire en rotation avec ledit organe tournant (15) et ledit élément de traction (24) étant solidaire en translation avec ledit élément d'activation (16).

11. Récipient de lait (3) selon la revendication précédente, **caractérisé en ce que** ledit organe tournant (15) comprend une poignée (25) étant solidaire d'une bague cylindrique (26) étant coaxiale par rapport à l'axe de rotation de l'organe tournant (15) et qui à l'extérieur présente ladite came (23).

12. Récipient de lait (3) selon l'une quelconque des revendications précédentes, **caractérisé en ce qu'**une tige cylindrique (29) est positionnée coaxialement à l'intérieur de la bague (26) et est solidaire de la bague (26), ladite tige (29) étant coaxialement ajustée à la pression dans un manchon cylindrique à l'intérieur (30) réalisé sur le couvercle (20) et délimitant, avec la tige (29), un espace (32) dans lequel est positionné un joint d'étanchéité (31), ledit joint (31) est fixé à un périmètre interne du manchon (30) et circonscrit la tige (29) avec laquelle il est destiné à définir lesdits moyens de réglage (18).

13. Récipient de lait (3) selon la revendication précédente, **caractérisé en ce que** le joint (31) se développe le long d'une ligne fermée ayant une hauteur variable par rapport à l'axe du manchon (30), et **en ce que** la paroi latérale de la tige (29) présente une rainure calibrée (33) se superposant sur le joint (31) et présentant une profondeur de pénétration dans l'épaisseur de la paroi latérale de la tige (29) qui croît progressivement dans la direction axiale de la tige (29).

14. Machine à café (1) présentant un récipient (3) selon l'une ou plusieurs des revendications précédentes.
